# EUROPÄISCHE PATENTSCHRIFT

(11) **EP 4 265 396 B1**
(45) Veröffentlichungstag und Bekanntmachung des Hinweises auf die Patenterteilung: **25.12.2024**
(21) Anmeldenummer: 23168633.8
(22) Anmeldetag: 19.04.2023
(51) Int. Cl.: B29C 64/106, B29C 64/209, B29C 64/241, B29C 64/393, B22F 10/22, B22F 12/00, B22F 12/53, B33Y 30/00, B33Y 50/02

(54) **VORRICHTUNG ZUR EXTRUSIONSBASIERTEN ADDITIVEN HERSTELLUNG EINES DREIDIMENSIONALEN OBJEKTS**
DEVICE FOR EXTRUSION-BASED ADDITIVE PRODUCTION OF A THREE-DIMENSIONAL OBJECT
DISPOSITIF DE FABRICATION ADDITIVE PAR EXTRUSION D'UN OBJET TRIDIMENSIONNEL

(30) Priorität: 21.04.2022 DE 102022109644
(43) Veröffentlichungstag der Anmeldung: 25.10.2023
(73) Patentinhaber: Hans Weber Maschinenfabrik GmbH, 96317 Kronach (DE)
(72) Erfinder: LANG, Andreas, 96317 Kronach (DE)
(74) Vertreter: Hafner & Kohl PartmbB

(56) Entgegenhaltungen:
- EP-A1- 3 797 971
- US-A1- 2020 016 834

## Beschreibung

Die Erfindung betrifft eine Vorrichtung zur extrusionsbasierten additiven Herstellung eines dreidimensionalen Objekts, umfassend eine Extrusionseinrichtung, welche einen Aufschmelzbereich zum Aufschmelzen eines Extrusionsmaterials und einen eine Austrittsöffnung aufweisenden Austrittsbereich zum Aufbringen des in dem Aufschmelzbereich aufgeschmolzenen Extrusionsmaterials auf einen Untergrund umfasst, wobei der Aufschmelzbereich und der Austrittsbereich über wenigstens einen von einem in dem Aufschmelzbereich aufgeschmolzenen Extrusionsmaterial durchströmbaren Strömungskanal miteinander verbunden sind.

Entsprechende Vorrichtungen zur extrusionsbasierten additiven Herstellung dreidimensionaler Objekte sind aus dem Stand der Technik in einer Vielzahl an Ausführungsformen dem Grunde nach bekannt und umfassen typischerweise eine Extrusionseinrichtung, welche einen eine düsenartige bzw. -förmige Austrittsöffnung aufweisenden Austrittsbereich zum Aufbringen eines aufgeschmolzenen Extrusionsmaterials auf einen Untergrund umfasst.

Es ist bekannt, dass den Austrittsbereichen jeweiliger Vorrichtungen Verschlusseinrichtungen zugeordnet sein können, über welche jeweilige Austrittsöffnungen bedarfs- und damit zeitweise verschlossen werden können, sodass ein unerwünschter Austritt von aufgeschmolzenem Extrusionsmaterial auf einen Untergrund bedarfs- und damit zeitweise nicht möglich ist.

Die bekannten Verschlusseinrichtungen sind in ihrem funktionellen wie auch konstruktiven Aufbau regelmäßig vergleichsweise aufwändig konzipiert, sodass ein Bedarf nach einer Vorrichtung mit einer einfach aufgebauten, gleichwohl zuverlässigen Verschlussmöglichkeit des Austrittsbereichs besteht.

Verschlussprinzipien für Extruderdüsen sind aus den Dokumenten EP 3 797 971 A1 und US 2020/016834 A1 bekannt.

Hiervon ausgehend liegt der Erfindung die Aufgabe zugrunde, eine verbesserte Vorrichtung zur extrusionsbasierten additiven Fertigung eines dreidimensionalen Objekts anzugeben.

Die Aufgabe wird durch eine Vorrichtung zur extrusionsbasierten additiven Herstellung eines dreidimensionalen Objekts gemäß Anspruch 1 gelöst. Die hierzu abhängigen Ansprüche betreffen mögliche Ausführungsformen der Vorrichtung.

Ein erster Aspekt der hierin beschriebenen Erfindung betrifft eine Vorrichtung zur extrusionsbasierten additiven Herstellung wenigstens eines dreidimensionalen Objekts. Die Vorrichtung ist sonach zur extrusionsbasierten additiven und damit lagen- bzw. schichtweisen Herstellung wenigstens eines dreidimensionalen Objekts aus einem Extrusionsmaterial eingerichtet. Die extrusionsbasierte additive Herstellung wenigstens eines dreidimensionalen Objekts kann vermittels der Vorrichtung sonach lagen- bzw. schichtweise erfolgen.

Unter einem vermittels der Vorrichtung additiv herstellbaren bzw. hergestellten Objekt kann grundsätzlich jedweder dreidimensionale Gegenstand oder jedweder Abschnitt eines dreidimensionalen Gegenstands verstanden werden. Ein dreidimensionaler Gegenstand kann z. B. ein technisches Bauteil oder eine technische Bauteilgruppe sein. Ein Abschnitt eines dreidimensionalen Gegenstands kann entsprechend ein Abschnitt eines technischen Bauteils oder ein Abschnitt einer technischen Bauteilgruppe sein.

Unter einem Extrusionsmaterial ist typischerweise ein extrudierbares bzw. extrusionsfähiges Kunststoffmaterial zu verstehen. Bei einem vermittels der Vorrichtung verarbeitbaren Extrusionsmaterial handelt es sich sonach typischerweise um ein extrudierbares bzw. extrusionsfähiges Kunststoffmaterial. Es kommen insbesondere als Granulat bereitgestellte thermoplastische Kunststoffmaterialien in Betracht. Der Begriff "Kunststoffmaterial" kann auch Mischungen wenigstens zweier chemisch unterschiedlicher Kunststoffmaterialien und/oder Mischungen wenigstens eines Kunststoffmaterials mit wenigstens einem weiteren Material, wie z. B. einem Füllstoffmaterial, beinhalten.

Die Vorrichtung umfasst eine Extrusionseinrichtung, welche einen wenigstens eine, typischerweise düsenartige bzw. -förmige, Austrittsöffnung aufweisenden Austrittsbereich zum Aufbringen eines aufgeschmolzenen Extrusionsmaterials auf einen Untergrund, wie z. B. auf eine Bauplatte oder auf eine bereits aufgebrachte Lage bzw. Schicht des oder eines Extrusionsmaterials, umfasst. Die wenigstens eine Austrittsöffnung kann in einem den Austrittsbereich bildenden Bauteil respektive in einer den Austrittsbereich bildenden Bauteilgruppe der Extrusionseinrichtung ausgebildet sein oder an oder in einem separaten Düsenbauteil angeordnet oder ausgebildet, welches an einem entsprechenden Bauteil oder einer entsprechenden Bauteilgruppe der Extrusionseinrichtung angeordnet ist. Bei einem entsprechenden Bauteil respektive einer entsprechenden Bauteilgruppe der Extrusionseinrichtung kann es sich z. B. um ein im Weiteren genanntes Adapterbauteil respektive eine entsprechende Adapterbauteilgruppe handeln.

Der Austrittsbereich weist wenigstens einen von dem auf den Untergrund aufzubringenden aufgeschmolzenen Extrusionsmaterial durchströmbaren Strömungskanal auf. Der wenigstens eine Strömungskanal kann, insbesondere im Bereich eines einem Untergrund, auf welchem im Betrieb der Vorrichtung aufgeschmolzenes Extrusionsmaterial aufzubringen ist, zugewandten freien Endes, eine die wenigstens eine Austrittsöffnung bildende Öffnung aufweisen. Alternativ kann der wenigstens eine Strömungskanal, d. h. insbesondere ein Strömungsausgang des wenigstens einen Strömungskanals, in die wenigstens eine Austrittsöffnung münden; dies gilt insbesondere für Ausführungsform, in welchen die wenigstens eine Austrittsöffnung an oder in einem separaten Düsenbauteil ausgebildet ist. In jedem Fall lässt sich zwischen dem wenigstens einen Strömungskanal und der wenigstens einen Austrittsöffnung eine strömungstechnische Verbindung ausbilden, über welche aufgeschmolzenes Extrusionsmaterial von dem wenigstens einen Strömungskanal in die bzw. in Richtung der wenigstens einen Ausströmöffnung strömen kann.

Der wenigstens eine Strömungskanal kann sich zumindest abschnittsweise, gegebenenfalls vollständig, entlang einer Strömungskanalachse durch den Austrittsbereich erstrecken, welche mit einer Symmetrie- bzw. Zentralachse einer Extruderkammer oder einer Extruderschnecke eines Aufschmelzbereichs der Extrusionseinrichtung fluchten kann. Insbesondere kann sich der wenigstens eine Strömungskanal zumindest abschnittsweise, gegebenenfalls vollständig, geradlinig durch den Austrittsbereich erstrecken und eine geradlinige Strömungskanalachse definieren, welche mit einer Symmetrie- bzw. Zentralachse einer Extruderkammer oder einer Extruderschnecke eines Aufschmelzbereichs der Extrusionseinrichtung fluchten kann.

Die Extrusionseinrichtung kann sonach, wie angedeutet, einen Aufschmelzbereich zum Aufschmelzen eines Extrusionsmaterials umfassen. Der Aufschmelzbereich kann zumindest abschnittsweise, gegebenenfalls vollständig, durch eine Extruderkammer der Extrusionseinrichtung gebildet sein oder eine solche umfassen. In der Extruderkammer kann wenigstens eine Extruderschnecke der Extrusionseinrichtung angeordnet oder ausgebildet sein. Die Extruderkammer kann wenigstens einen Strömungsausgang umfassen, über welchen aufgeschmolzenes Extrusionsmaterial aus der Extruderkammer in den bzw. in Richtung des wenigstens einen Strömungskanals ausströmen kann. Die Extruderkammer kann einen Gehäusekörper mit einem Strömungsausgang, über welchen in dem Aufschmelzbereich aufgeschmolzenes Extrusionsmaterial in Richtung des Austrittsbereichs aus dem Aufschmelzbereich ausströmen kann, umfassen.

Der wenigstens Strömungskanal kann sich von dem Strömungsausgang des Aufschmelzbereichs bis zu der wenigstens einen Austrittsöffnung des Austrittsbereichs erstrecken, sodass aufgeschmolzenes Extrusionsmaterial von dem Aufschmelzbereich über den Austrittsbereich, d. h. insbesondere über die wenigstens eine Austrittsöffnung, auf einen Untergrund aufbringbar ist. Der Aufschmelzbereich (sofern vorhanden) und der Austrittsbereich sind sonach typischerweise strömungstechnisch direkt oder indirekt miteinander verbunden.

Der Austrittsbereich kann - wie weiter oben bereits angedeutet - zumindest abschnittsweise, gegebenenfalls vollständig, durch ein an dem wenigstens einen Strömungsausgang der Extruderkammer angeordneten Adapterbauteil ausgebildet sein oder ein solches umfassen. Das Adapterbauteil kann einen Gehäusekörper umfassen. Der wenigstens eine Strömungskanal kann in dem Gehäusekörper des Adapterbauteils ausgebildet sein, d. h. sich zumindest abschnittsweise, gegebenenfalls vollständig, durch den Gehäusekörper erstrecken.

Die Vorrichtung umfasst eine Verschlusseinrichtung, welche zum bedarfs- bzw. zeitweisen Verschluss des wenigstens einen Strömungskanals eingerichtet ist. Die Verschlusseinrichtung umfasst wenigstens ein dem wenigstens einen Strömungskanal zugeordnetes Verschlusselement. Das wenigstens eine Verschlusselement umfasst einen eine Längsachse definierenden Verschlusselementabschnitt, welcher wenigstens eine diesen, insbesondere vollständig, durchsetzende Durchströmöffnung aufweist. Der Verschlusselementabschnitt kann als bolzenartiger bzw. -förmiger Bauteilabschnitt ausgebildet sein, welcher wenigstens eine diesen vollständig durchsetzende Durchströmöffnung aufweist. Analoges gilt für den ebenso denkbaren Fall, in dem das gesamte Verschlusselement als bolzenartiges bzw. - förmiges Bauteil ausgebildet ist, welches sonach naturgemäß einen entsprechenden Verschlusselementabschnitt aufweist. Die Abmessungen der wenigstens einen Durchströmöffnung, d. h. insbesondere deren Innendurchmesser, können den Abmessungen des wenigstens einen Strömungskanals, d. h. insbesondere dessen Innendurchmesser, entsprechen. Wie sich im Weiteren ergibt, durchsetzt die wenigstens eine Durchströmöffnung den Verschlusselementabschnitt respektive das Verschlusselement in einer Richtung, welche von der durch die Längsachse des Verschlusselementabschnitts respektive des Verschlusselements definierten Längsrichtung verschieden ist.

Der Verschlusselementabschnitt ist in wenigstens eine Offenstellung, in welcher in aufgeschmolzenes Extrusionsmaterial, insbesondere in Richtung der Austrittsöffnung, durch die wenigstens eine Durchströmöffnung strömen kann, und in wenigstens eine Schließstellung, in welcher aufgeschmolzenes Extrusionsmaterial nicht durch die wenigstens eine Durchströmöffnung strömen kann, bewegbar. Der Verschlusselementabschnitt ist sonach aufgrund bewegbarer Lagerung in wenigstens einem Bewegungsfreiheitsgrad, insbesondere reversibel, in wenigstens eine Offenstellung, in welcher aufgeschmolzenes Extrusionsmaterial, insbesondere in Richtung der Austrittsöffnung, durch die wenigstens eine Durchströmöffnung strömen kann, und in wenigstens eine Schließstellung, in welcher aufgeschmolzenes Extrusionsmaterial nicht durch die wenigstens eine Durchströmöffnung strömen kann, überführbar. Folglich ist in der wenigstens einen Offenstellung des Verschlusselementabschnitts ein Aufbringen von aufgeschmolzenem Extrusionsmaterial auf einen Untergrund möglich, während in der wenigstens einen Schließstellung des Verschlusselementabschnitts ein Aufbringen von aufgeschmolzenem Extrusionsmaterial auf einen Untergrund nicht möglich ist.

Sofern der Verschlusselementabschnitt in mehrere Offen- und/oder Schließstellungen bewegbar ist, können sich diese in ihren jeweiligen Öffnungs- bzw. Schließgraden unterscheiden; insbesondere ist eine erste Offenstellung, welche eine vollständige Öffnung des wenigstens einen Strömungskanals (Öffnungsgrad 100%) ermöglicht, und eine erste Schließstellung, welche einen vollständigen Verschluss des wenigstens einen Strömungskanals (Verschlussgrad 100%) ermöglicht, vorhanden. Zudem kann wenigstens eine weitere Offenstellung, welche eine im Vergleich zu der ersten Offenstellung reduzierte Öffnung des wenigstens einen Strömungskanals (Öffnungsgrad < 100 %) ermöglicht, und/oder wenigstens eine weitere Schließstellung, welche einen im Vergleich zu der ersten Schließstellung reduzierten Verschluss des wenigstens einen Strömungskanals (Verschlussgrad < 100 %) ermöglicht, vorhanden sein.

Insgesamt ist durch das beschriebene Verschlusselement eine einfach konzipierte und zuverlässige Verschlusseinrichtung einer Vorrichtung realisiert, sodass insgesamt eine verbesserte Vorrichtung zur extrusionsbasierten additiven Herstellung eines dreidimensionalen Objekts gegeben ist.

Zur Realisierung entsprechender Bewegungen des Verschlusselementabschnitts respektive des Verschlusselements in die wenigstens eine Offenstellung und/oder in die wenigstens eine Verschlussstellung kann dem Verschlusselementabschnitt respektive dem Verschlusselement wenigstens eine, beispielsweise (elektro)motorische, hydraulische oder pneumatische, Antriebseinrichtung zugeordnet sein. Eine entsprechende Antriebseinrichtung kann eingerichtet sein, Kräfte bzw. Momente zu erzeugen und direkt oder indirekt auf den Verschlusselementabschnitt respektive das Verschlusselement zu übertragen, wodurch der Verschlusselementabschnitt respektive das Verschlusselement in die wenigstens eine Offenstellung und/oder in die wenigstens eine Verschlussstellung bewegbar ist. Ergänzend kann eine entsprechende Antriebseinrichtung eingerichtet sein, Kräfte bzw. Momente zu erzeugen, wodurch der Verschlusselementabschnitt respektive das Verschlusselement in der wenigstens einen Offenstellung und/oder in der wenigstens einen Verschlussstellung sicherbar ist.

Nachfolgend werden beispielhaft mögliche Ausführungsformen der Vorrichtung näher erläutert, welche in beliebiger Weise miteinander kombinierbar sind:
In einer Ausführungsform kann der Verschlusselementabschnitt respektive das Verschlusselement in wenigstens einem rotatorischen Bewegungsfreiheitsgrad bewegbar sein. Der Verschlusselementabschnitt respektive das Verschlusselement kann sonach in wenigstens einem rotatorischen Bewegungsfreiheitsgrad bewegbar gelagert sein. Mithin kann der Verschlusselementabschnitt respektive das Verschlusselement auf einfache Weise durch Drehen bzw. Rotieren um eine Dreh- bzw. Rotationsachse in die wenigstens eine Offen- und/oder in die wenigstens eine Schließstellung bewegt werden. Beispielsweise kann der Verschlusselementabschnitt respektive das Verschlusselement auf einfache Weise durch Drehen bzw. Rotieren um eine Dreh- bzw. Rotationsachse um einen Winkel von 90° von der wenigstens einen Offenstellung in die wenigstens eine Schließstellung bewegt werden und/oder umgekehrt. Dreh- bzw. Rotationsbewegungen des Verschlusselementabschnitts respektive des Verschlusselements können in einer oder in mehreren Drehrichtungen erfolgen; der Verschlusselementabschnitt respektive das Verschlusselement kann sonach in einer oder in mehreren Drehrichtungen bewegbar sein.

In einer Ausführungsform kann der Verschlusselementabschnitt respektive das Verschlusselement in wenigstens einem rotatorischen Bewegungsfreiheitsgrad um seine Längsachse bewegbar sein. Bei der erwähnten Dreh- bzw. Rotationsachse kann es sich sonach um die Längsachse des Verschlusselementabschnitts respektive des Verschlusselements oder um eine hierzu parallele Achse handeln.

In einer Ausführungsform kann die wenigstens eine Durchströmöffnung den Verschlusselementabschnitt respektive das Verschlusselement radial bezüglich dessen Längsachse durchsetzen. Der Verschlusselementabschnitt respektive das Verschlusselement kann sonach mit einer diesen respektive dieses radial bezüglich dessen Längsachse vollständig durchsetzenden Öffnung - diese kann z. B. bohrungsartig bzw. -förmig, mithin als Durchgangsbohrung ausgebildet sein, versehen sein, durch welche die wenigstens eine Durchströmöffnung gebildet ist.

In einer Ausführungsform kann die wenigstens eine Durchströmöffnung eine Zentralachse aufweisen, welche in der wenigstens einen Offenstellung des Verschlusselementabschnitts respektive des Verschlusselements mit einer Zentralachse des wenigstens einen Strömungskanals fluchtet. Durch die sonach in der wenigstens einen Offenstellung des Verschlusselementabschnitts respektive des Verschlusselements gegebene fluchtende Anordnung bzw. Ausrichtung der wenigstens einen Durchströmöffnung und des wenigstens einen Strömungskanals ist ein störungsfreies Durchströmen der wenigstens einen Durchströmöffnung mit aufgeschmolzenem Extrusionsmaterial möglich.

In einer Ausführungsform kann der Verschlusselementabschnitt respektive das Verschlusselement mehrere axial bezüglich seiner Längsachse benachbart angeordnete oder ausgebildete Durchströmöffnungen aufweisen. Der Verschlusselementabschnitt respektive das Verschlusselement kann derart sonach über unterschiedlich dimensionierte Durchströmöffnungen z. B. an unterschiedlich dimensionierte Strömungskanäle anpassbar sein. Der Verschlusselementabschnitt respektive das Verschlusselement kann in diesem Fall gegebenenfalls axial bezüglich seiner Längsachse bewegbar gelagert sein, um jeweilige Durchströmöffnungen in Betriebsstellungen zu überführen, in welcher diese - wie erwähnt, insbesondere über entsprechende Dreh- bzw. Rotationsbewegungen des Verschlusselementabschnitts respektive des Verschlusselements um dessen Längsachse - in jeweilige Offen- und Schließstellungen bewegt werden können.

Die Vorrichtung umfasst eine Lagerungseinrichtung, welche zwei Lagerstellen zur bewegbaren Lagerung zumindest des Verschlusselementabschnitts aufweist. Die Lagerungseinrichtung ermöglicht im Allgemeinen eine stabile Lagerung zumindest des Verschlusselementabschnitts relativ zu dem wenigstens einen Strömungskanal, sodass ein zuverlässiges Überführen des Verschlusselementabschnitts respektive des Verschlusselements in die wenigstens eine Offen- und in die wenigstens eine Schließstellung und damit ein zuverlässiges Öffnen und Verschließen des wenigstens einen Strömungskanals gewährleistet ist.

Wenigstens eine Lagerstelle ist an oder in einem an einem Strömungsausgang einer Extruderkammer der Extrusionseinrichtung angeordneten Adapterbauteil angeordnet oder ausgebildet. Ergänzend ist wenigstens eine Lagerstelle, insbesondere axial bezüglich der Längsachse des Verschlusselementabschnitts respektive des Verschlusselements, beabstandet von der Extrusionseinrichtung oder beabstandet von einem an einem Strömungsausgang einer Extruderkammer der Extrusionseinrichtung angeordneten Adapterbauteil angeordnet oder ausgebildet. In einer im Hinblick auf eine besonders stabile Lagerung erfindungsgemäße Variante mit mehreren Lagerstellen ist eine erste Lagerstelle an oder in einem an einem Strömungsausgang einer Extruderkammer der Extrusionseinrichtung angeordneten Adapterbauteil angeordnet oder ausgebildet und eine weitere Lagerstelle, insbesondere axial bezüglich der Längsachse des Verschlusselementabschnitts respektive des Verschlusselements, beabstandet von der Extrusionseinrichtung oder beabstandet von einem an einem Strömungsausgang einer Extruderkammer der Extrusionseinrichtung angeordneten Adapterbauteil angeordnet oder ausgebildet.

In einer Ausführungsform kann ein Gehäusekörper des Austrittsbereichs, insbesondere ein Gehäusekörper eines an einem Strömungsausgang einer Extruderkammer der Extrusionseinrichtung angeordneten Adapterbauteils, einen eine Lagerstelle bildenden Aufnahmebereich zumindest für den Verschlusselementabschnitt aufweisen. Mithin kann wenigstens eine Lagerstelle der Lagerungseinrichtung baulich kompakt in einen Gehäusekörper des Austrittsbereichs, d. h. insbesondere in einen Gehäusekörper eines an einem Strömungsausgang einer Extruderkammer der Extrusionseinrichtung angeordneten Adapterbauteils, integriert sein. Ein entsprechender Aufnahmebereich kann z. B. durch eine bohrungsartige bzw. -förmige Ausnehmung in einem entsprechenden Gehäusekörper realisiert sein. Eine entsprechende Ausnehmung kann sich winklig, d. h. insbesondere rechtwinklig, relativ zu der weiter oben erwähnten Strömungskanalachse erstreckend angeordnet oder ausgerichtet sein. Eine entsprechende Ausnehmung kann wenigstens eine Anschlagfläche aufweisen, welche eine gewünschte Anordnung des Verschlusselementabschnitts und insbesondere der wenigstens einen Durchströmöffnung relativ zu dem wenigstens einen Strömungskanal gewährleistet. Derart kann der Montageaufwand der Verschlusseinrichtung erheblich vereinfacht werden.

In einer Ausführungsform kann dem Aufnahmebereich eine Dichteinrichtung zugeordnet sein, welche wenigstens ein zumindest den Verschlusselementabschnitt zumindest abschnittsweise, gegebenenfalls vollständig, außenumfangsseitig umgebendes Dichtelement aufweist. Durch eine entsprechende Dichteinrichtung kann ein unerwünschter Austritt von aufgeschmolzenem Extrusionsmaterial über den Aufnahmebereich unterbunden bzw. reduziert werden. Ein entsprechendes Dichtelement kann ringartig bzw. -förmig ausgebildet sein; bei einem entsprechenden Dichtelement kann es sich sonach um einen Dichtring handeln.

In einer Ausführungsform kann das wenigstens eine Dichtelement in einem durch einen hülsenartigen bzw. -förmigen Aufnahmekörper begrenzenten Aufnahmeraum aufgenommen sein. Dem Aufnahmekörper kann eine Anpresseinrichtung, welche wenigstens ein Anpresselement, z. B. in Form einer axial bezüglich der Längsachse des Verschlusselementabschnitts respektive des Verschlusselements gegen den Aufnahmekörper, z. B. durch Verschrauben, verspannbaren Anpressplatte, aufweist, zugeordnet sein, welche eingerichtet ist, eine parallel zu der Längsachse des Verschlusselementabschnitts respektive des Verschlusselements wirkende Anpresskraft auf das wenigstens eine Dichtelement aufzubringen. Eine entsprechende Anpresskraft kann insbesondere derart wirken, dass sich das wenigstens eine Dichtelement radial bezüglich der Längsachse des Verschlusselementabschnitts respektive des Verschlusselements gegen eine den Aufnahmeraum begrenzende Wandung des Aufnahmekörpers verformt. Die Dichtwirkung der Dichteinrichtung - das wenigstens eine Dichtelement ist zumindest in dieser Ausführungsform aus einem geeigneten verformbaren Dichtelementmaterial, wie z. B. einem Elastomermaterial, gebildet - kann derart erhöht werden. Analoges gilt für Anordnung mit mehreren Dichtelementen.

In einer Ausführungsform kann die Vorrichtung eine hardware- und/oder softwaremäßig implementierte Steuereinrichtung umfassen, welche eingerichtet ist, Steuerbefehle bzw. - informationen zur Steuerung von Bewegungen des Verschlusselementabschnitts respektive des Verschlusselements in die wenigstens eine Offen- und/oder in die wenigstens eine Schließstellung zu erzeugen. Bewegungen des Verschlusselementabschnitts respektive des Verschlusselements in die wenigstens eine Offen- und/oder in die wenigstens eine Schließstellung können sonach auf Grundlage entsprechender Steuerbefehle bzw. - informationen durch eine entsprechende Steuereinrichtung genau gesteuert werden. Eine entsprechende Steuereinrichtung kann datenkommunikationsmäßig mit einer übergeordneten (zentralen) Steuerung der Vorrichtung, welche z. B. auch eine Benutzerschnittstelle aufweist, kommunizieren.

In einer Ausführungsform kann die Steuereinrichtung eingerichtet sein, die Steuerbefehle bzw. -informationen auf Grundlage von von wenigstens einer Sensoreinrichtung gelieferten Sensorinformationen, insbesondere betreffend den Druck und/oder die Temperatur und/oder die Strömungsgeschwindigkeit von in der Vorrichtung befindlichem aufgeschmolzenem Extrusionsmaterial, zu erzeugen. Eine entsprechende Sensoreinrichtung kann z. B. ein oder mehrere an oder in einem Gehäusekörper des Austrittsbereichs, insbesondere an oder in einem Gehäusekörper eines an einem Strömungsausgang einer Extruderkammer der Extrusionseinrichtung angeordneten Adapterbauteils, angeordnete oder ausgebildete Sensorelemente umfassen.

In einer Ausführungsform kann die Extrusionseinrichtung in wenigstens einem translatorischen und/oder rotatorischen Bewegungsfreiheitsgrad relativ zu einem Untergrund und/oder zu einem Objekt bewegbar gelagert sein kann. Der Extrusionseinrichtung kann sonach eine, beispielsweise (elektro)motorische, hydraulische oder pneumatische, Antriebseinrichtung zugeordnet sein, über welche sich eine die Extrusionseinrichtung in eine translatorische und/oder rotatorische Bewegung relativ zu einem Untergrund und/oder zu einem Objekt versetzende Antriebskraft bzw. ein entsprechendes Antriebsmoment erzeugen lässt. Eine entsprechende Antriebseinrichtung kann Bestandteil einer Handhabungseinrichtung, welche zur bewegbaren Handhabung der Extrusionseinrichtung in wenigstens einem translatorischen und/oder rotatorischen Bewegungsfreiheitsgrad relativ zu einem Untergrund und/oder zu einem Objekt eingerichtet ist, sein. Eine entsprechende Handhabungseinrichtung kann sonach z. B. als ein- oder mehrachsige Robotereinrichtung ausgebildet sein oder eine solche umfassen.

Ein zweiter Aspekt der Erfindung betrifft ein Verfahren zur extrusionsbasierten additiven Herstellung wenigstens eines dreidimensionalen Objekts. Das Verfahren umfasst einen Schritt des Aufbringens eines aufgeschmolzenen Extrusionsmaterials auf einen Untergrund vermittels einer Vorrichtung gemäß dem ersten Aspekt der Erfindung. Insbesondere umfasst das Verfahren einen Schritt eines Bewegens des Verschlusselementabschnitts in eine Offen- und/oder in eine Schließstellung, um ein Aufbringen eines aufgeschmolzenen Extrusionsmaterials auf einen Untergrund zeitweise zu ermöglichen und/oder zeitweise nicht zu ermöglichen.

Sämtliche Ausführungen im Zusammenhang mit der Vorrichtung gemäß dem ersten Aspekt der Erfindung gelten analog für das Verfahren gemäß dem zweiten Aspekt der Erfindung und umgekehrt.

Die Erfindung ist anhand eines Ausführungsbeispiels in den Zeichnungen nochmals erläutert. Dabei zeigt:

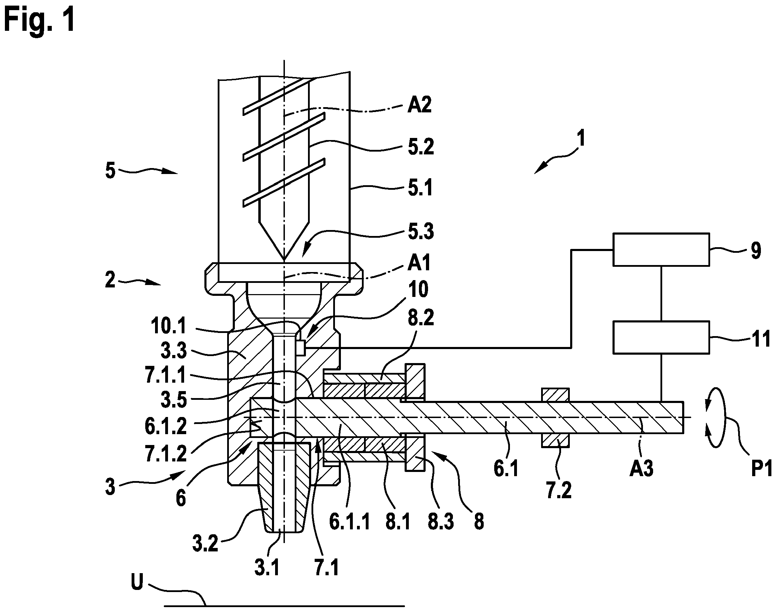

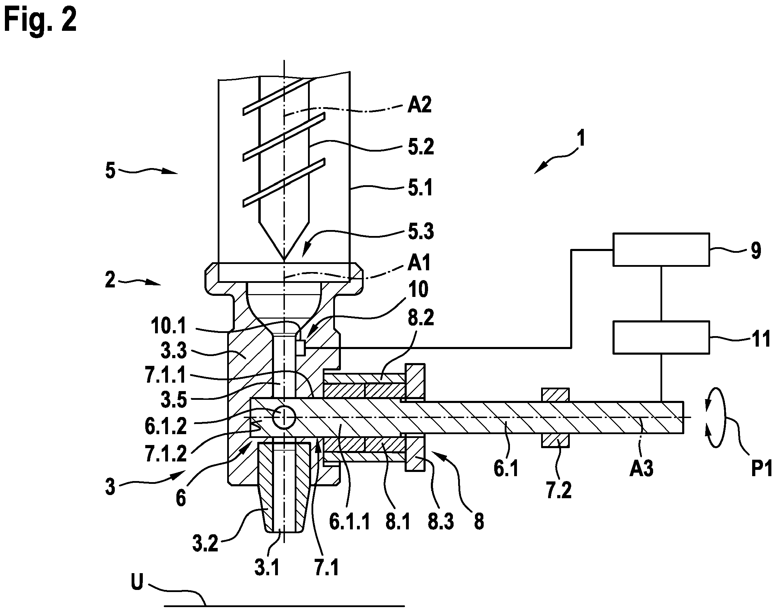

Fig. 1 und Fig. 2 eine Prinzipdarstellung einer Vorrichtung zur extrusionsbasierten additiven Herstellung eines dreidimensionalen Objekts gemäß einem Ausführungsbeispiel.

Die Fig. 1 und 2 zeigen eine Prinzipdarstellung einer Vorrichtung 1 zur extrusionsbasierten additiven Herstellung eines dreidimensionalen Objekts (nicht gezeigt) gemäß einem Ausführungsbeispiel in einer geschnittenen Ansicht.

Die in dem Ausführungsbeispiel gezeigte Vorrichtung 1 ist sonach zur extrusionsbasierten additiven und damit lagen- bzw. schichtweisen Herstellung wenigstens eines dreidimensionalen Objekts aus einem extrusionsfähigen Extrusionsmaterial, wie z. B. einem als Granulat bereitgestellten thermoplastischen Kunststoffmaterial, eingerichtet. Die extrusionsbasierte additive Herstellung wenigstens eines dreidimensionalen Objekts erfolgt vermittels der Vorrichtung 1 daher lagen- bzw. schichtweise.

Unter einem vermittels der Vorrichtung 1 additiv herstellbaren bzw. hergestellten Objekt kann grundsätzlich jedweder dreidimensionale Gegenstand oder jedweder Abschnitt eines dreidimensionalen Gegenstands verstanden werden. Ein dreidimensionaler Gegenstand kann z. B. ein technisches Bauteil oder eine technische Bauteilgruppe sein. Ein Abschnitt eines dreidimensionalen Gegenstands kann entsprechend ein Abschnitt eines technischen Bauteils oder ein Abschnitt einer technischen Bauteilgruppe sein.

Die Vorrichtung 1 umfasst eine Extrusionseinrichtung 2, welche einen eine düsenartige bzw. - förmige Austrittsöffnung 3.1 aufweisenden Austrittsbereich 3 zum Aufbringen eines aufgeschmolzenen Extrusionsmaterials auf einen Untergrund U, wie z. B. auf eine Bauplatte oder auf eine bereits aufgebrachte Lage bzw. Schicht des oder eines Extrusionsmaterials, umfasst. Die Austrittsöffnung 3.1 ist in dem in den Figuren gezeigten Ausführungsbeispiel rein beispielhaft an bzw. in einem separaten Düsenbauteil 3.2 als angeordnet oder ausgebildet, welches in dem Ausführungsbeispiel ebenso rein beispielhaft an einer Adapterbauteilgruppe 3.3 der Extrusionseinrichtung 3 angeordnet ist.

Ersichtlich weist der Austrittsbereich 3 einen von dem auf den Untergrund U aufzubringenden aufgeschmolzenen Extrusionsmaterial durchströmbaren Strömungskanal 3.5 auf. Der Strömungskanal 3.5 weist im Bereich eines dem Untergrund U zugewandten freien Endes eine mit der Austrittsöffnung 3.1 kommunizierende Öffnung auf. Der Strömungskanal 3.5 mündet in dem Ausführungsbeispiel sonach in die in dem Düsenbauteil 3.2 ausgebildete Austrittsöffnung. Zwischen dem Strömungskanal 3.5 und der Austrittsöffnung 3.1 ist daher eine strömungstechnische Verbindung ausgebildet, über welche ausgeschmolzenes Extrusionsmaterial aus dem Strömungskanal 3.5 in die bzw. in Richtung der Austrittsöffnung 3.1 strömen kann.

Ersichtlich erstreckt sich der Strömungskanal 3.5 geradlinig entlang einer Strömungskanalachse A1 durch den Austrittsbereich, welche Strömungskanalachse A1 in dem Ausführungsbeispiel rein beispielhaft mit einer Symmetrie- bzw. Zentralachse A2 einer Extruderkammer 5.1 bzw. einer in der Extruderkammer 5.1 aufgenommenen Extruderschnecke 5.2 eines Aufschmelzbereichs 5 der Extrusionseinrichtung 2 fluchtet.

Die Extrusionseinrichtung 2 umfasst sonach auch den Aufschmelzbereich 5 zum Aufschmelzen eines Extrusionsmaterials, welcher, wie angedeutet, durch die Extruderkammer 5.1 und die darin aufgenommene Extruderschnecke 5.2 gebildet ist respektive diese umfasst. Die Extruderkammer 5.1 umfasst einen Strömungsausgang 5.3, über welchen aufgeschmolzenes Extrusionsmaterial aus der Extruderkammer 5.1 in den bzw. in Richtung des Strömungskanals 3.5 ausströmen kann. Der Strömungsausgang 5.3 ist in dem Ausführungsbeispiel rein beispielhaft in einem Gehäusekörper der Extruderkammer 5.1 (nicht bezeichnet) ausgebildet.

Ersichtlich kann sich der Strömungskanal 3.5 von dem Strömungsausgang 5.3 der Extruderkammer 5.1 bis zu der Austrittsöffnung 3.1 erstrecken, sodass aufgeschmolzenes Extrusionsmaterial von dem Aufschmelzbereich 5 über den Austrittsbereich 3, d. h. insbesondere über die Austrittsöffnung 3.1, auf einen Untergrund U aufbringbar ist. Der Aufschmelzbereich 5 und der Austrittsbereich 3 sind sonach strömungstechnisch miteinander verbunden.

Wie erwähnt, ist der Austrittsbereich 3 in dem Ausführungsbeispiel rein beispielhaft durch das an dem Strömungsausgang 5.3 der Extruderkammer 5.1 angeordnete Adapterbauteil 3.3 und das an diesem angeordnete Düsenbauteil 3.2 ausgebildet bzw. umfasst diese. Ersichtlich umfasst auch das Adapterbauteil 3.3 einen Gehäusekörper (nicht bezeichnet), durch welches sich der Strömungskanal 3.5 z. B. bohrungsartig bzw. -förmig erstreckt.

Die Vorrichtung 1 umfasst eine Verschlusseinrichtung 6, welche zum bedarfs- bzw. zeitweisen Verschluss des Strömungskanals 3.5 eingerichtet ist. Die Verschlusseinrichtung 6 umfasst ein dem Strömungskanal 5.1 zugeordnetes Verschlusselement 6.1. Das in dem Ausführungsbeispiel beispielhaft bolzenartig- bzw. -förmig konfigurierte Verschlusselement 6.1 umfasst einen eine Längsachse A3 definierenden Verschlusselementabschnitt 6.1.1, welcher eine diesen in radialer und somit in einer von der durch die Längsachse A3 des Verschlusselementabschnitts 6.1.1 definierten Längsrichtung verschiedenen Richtung vollständig durchsetzende Durchströmöffnung 6.1.2 aufweist. Anhand von Fig. 1 ist ersichtlich, dass die Abmessungen der Durchströmöffnung 6.1.2, d. h. insbesondere deren Innendurchmesser, den Abmessungen des Strömungskanals 3.5, d. h. insbesondere dessen Innendurchmesser, entsprechen können.

Der Verschlusselementabschnitt 6.1.1 respektive das Verschlusselement 6.1 ist in eine in Fig. 1 gezeigte Offenstellung, in welcher in aufgeschmolzenes Extrusionsmaterial, insbesondere in Richtung der Austrittsöffnung 3.1, durch die wenigstens eine Durchströmöffnung 6.1.2 strömen kann, und in wenigstens eine in Fig. 2 gezeigte Schließstellung, in welcher aufgeschmolzenes Extrusionsmaterial nicht durch die wenigstens eine Durchströmöffnung 6.1.2 strömen kann, bewegbar. Der Verschlusselementabschnitt 6.1 ist sonach aufgrund seiner bewegbaren Lagerung in wenigstens einem Bewegungsfreiheitsgrad reversibel in eine in Fig. 1 gezeigte Offenstellung, in welcher aufgeschmolzenes Extrusionsmaterial in Richtung der Austrittsöffnung 3.1 durch die Durchströmöffnung 6.1.2 strömen kann, und in eine in Fig. 2 gezeigte Schließstellung, in welcher aufgeschmolzenes Extrusionsmaterial nicht durch die Durchströmöffnung 6.1.2 strömen kann, überführbar. Folglich ist in der wenigstens einen Offenstellung des Verschlusselementabschnitts 6.1.2 ein Aufbringen von aufgeschmolzenem Extrusionsmaterial auf den Untergrund U möglich, während in der wenigstens einen Schließstellung des Verschlusselementabschnitts 6.1.2 ein Aufbringen von aufgeschmolzenem Extrusionsmaterial auf den Untergrund U nicht möglich ist.

Sofern der Verschlusselementabschnitt 6.1.2 in mehrere Offen- und/oder Schließstellungen bewegbar ist, können sich diese in ihren jeweiligen Öffnungs- bzw. Schließgraden unterscheiden; insbesondere ist eine erste Offenstellung, welche eine vollständige Öffnung des Strömungskanals 3.5 (Öffnungsgrad 100%) ermöglicht, und eine erste Schließstellung, welche einen vollständigen Verschluss des Strömungskanals 3.5 (Verschlussgrad 100%) ermöglicht, vorhanden. Zudem kann wenigstens eine weitere Offenstellung, welche eine im Vergleich zu der ersten Offenstellung reduzierte Öffnung des Strömungskanals 3.5 (Öffnungsgrad < 100 %) ermöglicht, und/oder wenigstens eine weitere Schließstellung, welche einen im Vergleich zu der ersten Schließstellung reduzierten Verschluss des Strömungskanals 3.5 (Verschlussgrad < 100 %) ermöglicht, vorhanden sein.

Zur Realisierung entsprechender Bewegungen des Verschlusselementabschnitts 6.1.1 respektive des Verschlusselements 6.1 in die wenigstens eine Offenstellung und/oder in die wenigstens eine Verschlussstellung kann dem Verschlusselementabschnitt 6.1.1 respektive dem Verschlusselement 6.1 eine, beispielsweise (elektro)motorische, hydraulische oder pneumatische, Antriebseinrichtung 11 zugeordnet sein. Die Antriebseinrichtung 11 kann eingerichtet sein, Kräfte bzw. Momente zu erzeugen und direkt oder indirekt auf den Verschlusselementabschnitt 6.1.1 respektive das Verschlusselement 6.1 zu übertragen, wodurch der Verschlusselementabschnitt 6.1.1 respektive das Verschlusselement 6.1 in die wenigstens eine Offenstellung und/oder in die wenigstens eine Verschlussstellung bewegbar ist. Ergänzend kann Antriebseinrichtung 11 eingerichtet sein, Kräfte bzw. Momente zu erzeugen, wodurch der Verschlusselementabschnitt 6.1.1 respektive das Verschlusselement 6.1 in der wenigstens einen Offenstellung und/oder in der wenigstens einen Verschlussstellung sicherbar ist.

Wie durch den Doppelpfeil P1 angedeutet, ist der Verschlusselementabschnitt 6.1.1 respektive das Verschlusselement 6.1 in dem Ausführungsbeispiel in einem rotatorischen Bewegungsfreiheitsgrad bewegbar. Der Verschlusselementabschnitt 6.1.1 respektive das Verschlusselement 6.1 ist sonach in einem rotatorischen Bewegungsfreiheitsgrad bewegbar gelagert und kann daher auf einfache Weise durch Drehen bzw. Rotieren um eine durch die Längsachse A3 definierte Dreh- bzw. Rotationsachse in die wenigstens eine Offen- und/oder in die wenigstens eine Schließstellung bewegt werden. Konkret kann der Verschlusselementabschnitt 6.1.1 respektive das Verschlusselement 6.1 auf einfache Weise durch Drehen bzw. Rotieren um die Dreh- bzw. Rotationsachse um einen Winkel von 90° von der wenigstens einen Offenstellung in die wenigstens eine Schließstellung bewegt werden und/oder umgekehrt. Dreh- bzw. Rotationsbewegungen des Verschlusselementabschnitts 6.1.1 respektive des Verschlusselements 6.1 können in einer oder in mehreren Drehrichtungen erfolgen; der Verschlusselementabschnitt 6.1.1 respektive das Verschlusselement 6.1 kann sonach in einer oder in mehreren Drehrichtungen bewegbar sein.

Anhand von Fig. 1 ist weiter ersichtlich, dass die Durchströmöffnung 6.1.2 eine Zentralachse aufweist, welche in der wenigstens einen Offenstellung des Verschlusselementabschnitts 6.1.1 respektive des Verschlusselements 6.1 mit der Zentralachse A1 des Strömungskanals 3.5 fluchtet. Durch die sonach in der wenigstens einen Offenstellung des Verschlusselementabschnitts 6.1.1 respektive des Verschlusselements 6.1 gegebene fluchtende Anordnung bzw. Ausrichtung der Durchströmöffnung 6.1.2 und des Strömungskanals 3.5 ist ein störungsfreies Durchströmen der Durchströmöffnung 6.1.2 mit aufgeschmolzenem Extrusionsmaterial möglich.

Anhand der Figuren ist ferner ersichtlich, dass die Vorrichtung 1 eine Lagerungseinrichtung 7 umfasst, welche wenigstens eine Lagerstelle 7.1, 7.2 zur bewegbaren Lagerung zumindest des Verschlusselementabschnitts 6.1.1 aufweist. Die Lagerungseinrichtung 7 ermöglicht eine stabile Lagerung zumindest des Verschlusselementabschnitts 6.1.1 relativ zu dem Strömungskanal 3.5, sodass ein zuverlässiges Überführen des Verschlusselementabschnitts 6.1.1 respektive des Verschlusselements 6.1 in die wenigstens eine Offen- und in die wenigstens eine Schließstellung und damit ein zuverlässiges Öffnen und Verschließen des Strömungskanals 3.5 gewährleistet ist.

In dem Ausführungsbeispiel umfasst die Lagerungseinrichtung 7 eine erste Lagerstelle 7.1, welche an oder in der Extrusionseinrichtung 2, d. h. an oder in dem Adapterbauteil 3.3, angeordnet oder ausgebildet ist und eine weitere Lagerstelle 7.2, welche axial bezüglich der Längsachse A3 des Verschlusselementabschnitts 6.1.1 respektive des Verschlusselements 6.1 beabstandet von der Extrusionseinrichtung 2, d. h. dem Adapterbauteil 3.3, angeordnet oder ausgebildet ist.

In dem Ausführungsbeispiel ist die erste Lagerstelle 7.1 rein beispielhaft durch einen Aufnahmebereich 7.1.1 in dem Gehäusekörper des Adapterbauteils 3.3 gebildet und damit baulich kompakt in das Adapterbauteil 3.3 integriert. Der Aufnahmebereich 7.1.1 kann ersichtlich z. B. durch eine bohrungsartige bzw. -förmige Ausnehmung in dem Gehäusekörper des Adapterbauteils 3.3 realisiert sein, welche sich winklig, d. h. insbesondere rechtwinklig, relativ zu der Strömungskanalachse A2 erstreckend angeordnet oder ausgerichtet sein kann. Die Ausnehmung kann wenigstens eine Anschlagfläche 7.1.2 aufweisen, welche eine gewünschte Anordnung des Verschlusselementabschnitts 6.1.1 und insbesondere der Durchströmöffnung 6.1.2 relativ zu dem Strömungskanal 3.5 gewährleistet. Derart kann der Montageaufwand der Verschlusseinrichtung 6 erheblich vereinfacht werden.

Anhand der Figuren ist ferner ersichtlich, dass dem Aufnahmebereich 7.1.1 eine Dichteinrichtung 8 zugeordnet sein kann, welche ein oder mehrere zumindest den Verschlusselementabschnitt 6.1.1 außenumfangsseitig umgebende, ringartig bzw. -förmig ausgebildete Dichtelemente 8.1 aufweist. Durch die Dichteinrichtung 8 kann ein unerwünschter Austritt von aufgeschmolzenem Extrusionsmaterial über den Aufnahmebereich 7.1.1 unterbunden bzw. reduziert werden.

Ersichtlich können die Dichtelemente in einem durch einen hülsenartigen bzw. -förmigen Aufnahmekörper 8.2 begrenzenten Aufnahmeraum (nicht bezeichnet) aufgenommen sein, welchem eine Anpresseinrichtung 8.3, welche ein Anpresselement, z. B. in Form einer axial bezüglich der Längsachse A3 des Verschlusselementabschnitts 6.1.1 respektive des Verschlusselements 6.1 gegen den Aufnahmekörper 8.2, z. B. durch Verschrauben, verspannbaren Anpressplatte, aufweist, zugeordnet sein kann, welche eingerichtet ist, eine parallel zu der Längsachse A3 des Verschlusselementabschnitts 6.1.1 respektive des Verschlusselements 6.1 wirkende Anpresskraft auf die Dichtelemente 8.1 aufzubringen. Eine entsprechende Anpresskraft kann insbesondere derart wirken, dass sich die Dichtelemente 8.1 radial bezüglich der Längsachse A3 des Verschlusselementabschnitts 6.1.1 respektive des Verschlusselements 6.1 gegen eine den Aufnahmeraum begrenzende Wandung des Aufnahmekörpers 8.2 verformt. Die Dichtwirkung der Richteinrichtung 8 kann derart erhöht werden.

Das Ausführungsbeispiel zeigt schließlich, dass die Vorrichtung 1 eine hardware- und/oder softwaremäßig implementierte Steuereinrichtung 9 umfassen kann, welche eingerichtet ist, Steuerbefehle bzw. -informationen zur Steuerung von Bewegungen des Verschlusselementabschnitts 6.1.1 respektive des Verschlusselements 6.1 in die wenigstens eine Offen- und/oder in die wenigstens eine Schließstellung zu erzeugen. Bewegungen des Verschlusselementabschnitts 6.1.1 respektive des Verschlusselements 6.1 in die wenigstens eine Offen- und/oder in die wenigstens eine Schließstellung können sonach auf Grundlage entsprechender Steuerbefehle bzw. -informationen durch die Steuereinrichtung 9 genau gesteuert werden. Die Steuereinrichtung 9 kann datenkommunikationsmäßig mit einer übergeordneten (zentralen) Steuerung (nicht gezeigt) der Vorrichtung 1, welche z. B. auch eine Benutzerschnittstelle aufweist, kommunizieren.

Die Steuereinrichtung 9 kann eingerichtet sein, die Steuerbefehle bzw. -informationen auf Grundlage von von wenigstens einer Sensoreinrichtung 10 gelieferten Sensorinformationen, insbesondere betreffend den Druck und/oder die Temperatur und/oder die Strömungsgeschwindigkeit von in der Vorrichtung 1 befindlichem aufgeschmolzenem Extrusionsmaterial, zu erzeugen. Die Sensoreinrichtung 10 kann z. B. ein oder mehrere an oder in einem Gehäusekörper des Adapterbauteils angeordnete oder ausgebildete Sensorelemente 10.1 umfassen.

Wenngleich in dem Ausführungsbeispiel nicht gezeigt, kann der Verschlusselementabschnitt 6.1.1 respektive das Verschlusselement 6.1 mehrere axial bezüglich seiner Längsachse A3 benachbart angeordnete oder ausgebildete Durchströmöffnungen 6.1.2 aufweisen. Der Verschlusselementabschnitt 6.1.1 respektive das Verschlusselement 6.1 kann derart sonach über unterschiedlich dimensionierte Durchströmöffnungen 6.1.2 z. B. an unterschiedlich dimensionierte Strömungskanäle 3.5 anpassbar sein. Der Verschlusselementabschnitt 6.1.1 respektive das Verschlusselement 6.1 kann in diesem Fall gegebenenfalls axial bezüglich seiner Längsachse A3 bewegbar gelagert sein, um jeweilige Durchströmöffnungen 6.1.2 in Betriebsstellungen zu überführen, in welcher diese - wie erwähnt, insbesondere über entsprechende Dreh- bzw. Rotationsbewegungen des Verschlusselementabschnitts 6.1.1 respektive des Verschlusselements 6.1 um dessen Längsachse A3 - in jeweilige Offen- und Schließstellungen bewegt werden können.

Die Extrusionseinrichtung 2 kann in wenigstens einem translatorischen und/oder rotatorischen Bewegungsfreiheitsgrad relativ zu dem Untergrund U und/oder zu einem Objekt bewegbar gelagert sein kann. Der Extrusionseinrichtung 2 kann sonach eine, beispielsweise (elektro)motorische, hydraulische oder pneumatische, Antriebseinrichtung (nicht gezeigt) zugeordnet sein, über welche sich eine die Extrusionseinrichtung 2 in eine translatorische und/oder rotatorische Bewegung relativ zu dem Untergrund U und/oder zu einem Objekt versetzende Antriebskraft bzw. ein entsprechendes Antriebsmoment erzeugen lässt. Eine entsprechende Antriebseinrichtung kann Bestandteil einer Handhabungseinrichtung (ebenso nicht gezeigt), welche zur bewegbaren Handhabung der Extrusionseinrichtung 2 in wenigstens einem translatorischen und/oder rotatorischen Bewegungsfreiheitsgrad relativ zu dem Untergrund U und/oder zu einem Objekt eingerichtet ist, sein. Eine entsprechende Handhabungseinrichtung kann sonach z. B. als ein- oder mehrachsige Robotereinrichtung ausgebildet sein oder eine solche umfassen.

**Mit der in den** Figuren **gezeigten Vorrichtung 1 lässt sich ein Verfahren zur extrusionsbasierten additiven Herstellung wenigstens eines dreidimensionalen Objekts implementieren. Das Verfahren umfasst einen Schritt des Aufbringens eines aufgeschmolzenen Extrusionsmaterials auf einen Untergrund U und kann einen Schritt eines Bewegens des Verschlusselementabschnitts 6.1.1 respektive des Verschlusselements 6.1 in eine Offen- und/oder in eine Schließstellung, um ein Aufbringen eines aufgeschmolzenen Extrusionsmaterials auf einen Untergrund U zeitweise zu ermöglichen und/oder zeitweise nicht zu ermöglichen, umfassen.**

## Patentansprüche

1. Vorrichtung (1) zur extrusionsbasierten additiven Herstellung eines dreidimensionalen Objekts, umfassend eine Extrusionseinrichtung (2), welche einen wenigstens eine Austrittsöffnung (3.1) aufweisenden Austrittsbereich (3) zum Aufbringen eines aufgeschmolzenen Extrusionsmaterials auf einen Untergrund (U) umfasst, wobei der Austrittsbereich (3) wenigstens einen von dem auf den Untergrund (U) aufzubringenden aufgeschmolzenen Extrusionsmaterial durchströmbaren Strömungskanal (3.5) aufweist, und ein dem wenigstens einen Strömungskanal (3.5) zugeordnetes Verschlusselement (6.1), welches einen eine Längsachse (A3) definierenden Verschlusselementabschnitt (6.1.1) und wenigstens eine den Verschlusselementabschnitt (6.1.1) durchsetzende Durchströmöffnung (6.1.2) aufweist, wobei der Verschlusselementabschnitt (6.1.1) in wenigstens eine Offenstellung, in welcher in aufgeschmolzenes Extrusionsmaterial durch die wenigstens eine Durchströmöffnung (6.1.2) strömen kann, und in wenigstens eine Schließstellung, in welcher in aufgeschmolzenes Extrusionsmaterial nicht durch die wenigstens eine Durchströmöffnung (6.1.2) strömen kann, bewegbar ist, **gekennzeichnet durch** eine Lagerungseinrichtung (7), welche zwei Lagerstellen (7.1, 7.2) zur bewegbaren Lagerung des Verschlusselementabschnitts (6.1.1) aufweist, wobei wenigstens eine erste Lagerstelle (7.1) an oder in einem an einem Strömungsausgang (5.3) einer Extruderkammer (5.1) der Extrusionseinrichtung (2) angeordneten Adapterbauteil (3.3) angeordnet oder ausgebildet ist und wenigstens eine zweite Lagerstelle (7.2) beabstandet von dem an dem Strömungsausgang (5.3) der Extruderkammer (5.1) der Extrusionseinrichtung (2) angeordneten Adapterbauteil (3.3) angeordnet oder ausgebildet ist.

2. Vorrichtung nach Anspruch 1, **wobei** der Verschlusselementabschnitt (6.1.1) in wenigstens einem rotatorischen Bewegungsfreiheitsgrad bewegbar ist.

3. Vorrichtung nach Anspruch 1 oder 2, **wobei** der Verschlusselementabschnitt (6.1.1) in wenigstens einem rotatorischen Bewegungsfreiheitsgrad um seine Längsachse (A3) bewegbar ist.

4. Vorrichtung nach einem der vorhergehenden Ansprüche, **wobei** die wenigstens eine Durchströmöffnung (6.1.2) den Verschlusselementabschnitt (6.1.1) radial bezüglich dessen Längsachse (A3) durchsetzt.

5. Vorrichtung nach einem der vorhergehenden Ansprüche, **wobei** die wenigstens eine Durchströmöffnung (6.1.2) eine Zentralachse aufweist, welche in der wenigstens einen Offenstellung des Verschlusselementabschnitts (6.1.1) mit einer Zentralachse (A1) des wenigstens einen Strömungskanals (3.5) fluchtet.

6. Vorrichtung nach einem der vorhergehenden Ansprüche, **wobei** der Verschlusselementabschnitt (6.1.1) mehrere axial bezüglich seiner Längsachse (A3) benachbart angeordnete oder ausgebildete Durchströmöffnungen (6.1.2) aufweist.

7. Vorrichtung nach einem der vorhergehenden Ansprüche, **wobei** ein Gehäusekörper der Extrusionseinrichtung (2) oder ein Gehäusekörper eines an einem Strömungsausgang (5.3) einer Extruderkammer (5.1) der Extrusionseinrichtung (2) angeordneten Adapterbauteils (3.3) einen eine Lagerstelle bildenden Aufnahmebereich (7.1.1) für den Verschlusselementabschnitt (6.1.1) aufweist.

8. Vorrichtung nach Anspruch 7, **wobei** dem Aufnahmebereich (7.1.1) eine Dichteinrichtung (8) zugeordnet ist, welche wenigstens ein den Verschlusselementabschnitt (6.1.1) zumindest abschnittsweise, gegebenenfalls vollständig, außenumfangsseitig umgebendes Dichtelement (8.1) aufweist.

9. Vorrichtung nach Anspruch 8, **wobei** das wenigstens eine Dichtelement (8.1) in einem durch einen hülsenartigen bzw. -förmigen Aufnahmekörper (8.2) begrenzenten Aufnahmeraum aufgenommen ist, wobei dem Aufnahmekörper (8.2) eine Anpresseinrichtung zugeordnet ist, welche eingerichtet ist, eine parallel zu der Längsachse (A3) des Verschlusselementabschnitts (6.1.1) wirkende Anpresskraft auf das wenigstens eine Dichtelement (8.1) aufzubringen, insbesondere derart, dass sich das wenigstens eine Dichtelement (8.1) radial bezüglich der Längsachse des Verschlusselementabschnitts (6.1.1) gegen eine den Aufnahmeraum begrenzende Wandung des Aufnahmekörpers (8.1) verformt.

10. Vorrichtung nach einem der vorhergehenden Ansprüche, **ferner umfassend** eine Steuereinrichtung (9), eingerichtet ist, Steuerinformationen zur Steuerung von Bewegungen des Verschlusselementabschnitts (6.1.1) in die wenigstens eine Offen- und/oder in die wenigstens eine Schließstellung zu erzeugen.

11. Vorrichtung nach Anspruch 10, **wobei** die Steuereinrichtung (9) eingerichtet ist, die Steuerinformationen auf Grundlage von von wenigstens einer Sensoreinrichtung (10) gelieferten Sensorinformationen, insbesondere betreffend den Druck und/oder die Temperatur und/oder die Strömungsgeschwindigkeit von dem in der Vorrichtung (1) befindlichem aufgeschmolzenen Extrusionsmaterial, zu erzeugen.

12. Verfahren zur extrusionsbasierten additiven Herstellung eines dreidimensionalen Objekts, umfassend ein Aufschmelzen eines Extrusionsmaterials und Aufbringen des aufgeschmolzenen Extrusionsmaterials auf einen Untergrund vermittels einer Vorrichtung (1) gemäß einem der Ansprüche 1 bis 11.

## Claims

1. Device (1) for extrusion-based additive manufacturing of a three-dimensional object comprising an extrusion device (2) comprising an exit area (3) having at least one outlet opening (3.1) for applying a molten extrusion material to a substrate (U), wherein the exit area (3) comprises at least one of the molten extrusion material to be applied to the substrate (U) throughflowable flow channel (3.5), and a closure element (6.1) associated with at least one flow channel (3.5), which has a closure element section (6.1.1) defining a longitudinal axis (A3) and at least one throughflow opening (6.1.2) passing through the closure element section (6.1.1), wherein the closure element section (6.1.1) can flow in at least one open position, in which in the molten extrusion material through the at least one throughflow opening (6.1.2), and in at least one closing position, in which molten extrusion material cannot flow through at least one throughflow opening (6.1.2), is movable, **characterized by** a storage device (7) having two bearing positions (7.1, 7.2) for movable storage of the closure element portion (6.1.1), wherein at least one first bearing position (7.1) is arranged or formed at or in an adapter component (3.3) arranged at a flow outlet (5.3) of an extruder chamber (5.1) of the extrusion device (2) and at least one second bearing position (7.2) is spaced or formed from the adapter component (3.3) arranged at the flow outlet (5.3) of the extruder chamber (5.1) of the extrusion device (2).

2. Device according to claim 1, **wherein** the closure member portion (6.1.1) is movable in at least one rotational degree of freedom of movement.

3. Device according to claim 1 or 2, **wherein** the closure member portion (6.1.1) is movable in at least one rotational degree of freedom of movement around its longitudinal axis (A3).

4. Device according to one of the preceding claims, **wherein** the at least one flow opening (6.1.2) penetrates the closure member portion (6.1.1) radially with respect to its longitudinal axis (A3).

5. Device according to one of the preceding claims, **wherein** the at least one flow opening (6.1.2) has a central axis, which aligns in the at least one open position of the closure member portion (6.1.1) with a central axis (A1) of the at least one flow channel (3.5).

6. Device according to any one of the preceding claims, **wherein** the closure member portion (6.1.1) comprises a plurality of axially arranged or formed flow openings (6.1.2) adjacent to its longitudinal axis (A3).

7. Device according to any one of the preceding claims, **wherein** a housing body of the extrusion device (2) or a housing body of an adapter component (3.3) arranged at a flow outlet (5.3) of an extruder chamber (5.1) of the extrusion device (2) has a receiving region (7.1.1) forming a bearing point for the closure member portion (6.1.1).

8. Device according to claim 7, **wherein** the receiving region (7.1.1) is associated with a sealing device (8), which has at least one sealing element (8.1) surrounding the sealing element portion (6.1.1) at least in part, optionally completely, on the outer circumferential side.

9. Device according to claim 8, **wherein** the at least one sealing element (8.1) is received in a receiving space limited by a sleeve-like or -shaped receiving body (8.2), wherein the receiving body (8.2) is associated with a pressing means, which is arranged to apply a parallel to the longitudinal axis (A3) of the closure element portion (6.1.1) acting pressing force on the at least one sealing element (8.1), in particular such that the at least one sealing element (8.1) is deformed radially with respect to the longitudinal axis of the closure element portion (6.1.1) against a wall of the receiving body (8.1) limiting the receiving space.

10. Device according to one of the preceding claims, **further comprising** a control device (9), is set up to generate control information for controlling movements of the closure member portion (6.1.1) into the at least one open and / or into the at least one closing position.

11. Device according to claim 10, **wherein** the control device (9) is set up to generate the control information based on at least one sensor device (10) supplied sensor information, in particular with regard to the pressure and / or the temperature and / or the flow velocity of the melted extrusion material located in the device (1).

12. A method for extrusion-based additive manufacturing of a three-dimensional object comprising melting an extrusion material and applying the molten extrusion material to a substrate by means of an apparatus (1) according to any one of claims 1 to 11.

## Revendications

1. Dispositif (1) de fabrication additive à base d'extrusion d'un objet tridimensionnel comprenant un dispositif d'extrusion (2) comprenant une zone de sortie (3) comportant au moins un orifice de sortie (3.1) pour l'application d'un matériau d'extrusion fondu sur un support (U), la zone de sortie (3) comprenant au moins un canal d'écoulement (3.5) traversable du matériau d'extrusion fondu à appliquer sur le support (U), et un élément de fermeture (6.1) associé à au moins un canal d'écoulement (3.5), comportant au moins une section d'élément de fermeture définissant un axe longitudinal (A3) (6.1.1) et au moins une ouverture de passage (6.1.2) traversant la section d'élément de fermeture (6.1.1), la section d'élément de fermeture (6.1.1) présentant au moins une position ouverte dans laquelle le matériau d'extrusion fondu peut circuler à travers au moins un orifice (6.1.2) et peut être déplacé dans au moins une position de fermeture dans laquelle un matériau d'extrusion fondu ne peut traverser au moins un orifice de passage (6.1.2), **caractérisée par** un dispositif de stockage (7) comportant deux emplacements de stockage (7.1, 7.2) pour le stockage mobile de la section de l'élément de fermeture (6.1.1), au moins un premier emplacement de stockage (7.1) étant disposé ou formé à l'intérieur d'un composant adaptateur (3.3) situé à une sortie d'écoulement (5.3) d'une chambre d'extrudeuse (5.1) du dispositif d'extrusion (2) et au moins un deuxième emplacement de stockage (7.2) étant disposé ou formé à l'écart du composant adaptateur (3.3) situé à la sortie d'écoulement (5.3) de la chambre d'extrudeuse (5.1) du dispositif d'extrusion (2).

2. Dispositif selon la revendication 1, **dans lequel** la section de l'élément de fermeture (6.1.1) peut être déplacée dans au moins un degré de liberté de mouvement rotatif.

3. Dispositif selon la revendication 1 ou 2, **dans lequel** la section de l'élément de fermeture (6.1.1) peut être déplacée autour de son axe longitudinal (A3) dans au moins un degré de liberté de mouvement rotatif.

4. Dispositif selon l'une quelconque des revendications précédentes, **dans lequel** au moins un orifice de passage (6.1.2) traverse radialement la section de l'élément de fermeture (6.1.1) par rapport à son axe longitudinal (A3).

5. Dispositif selon l'une quelconque des revendications précédentes, **dans lequel** au moins un orifice de passage (6.1.2) comporte un axe central qui, dans l'au moins un affichage de la section de l'élément de fermeture (6.1.1) avec un axe central (A1) d'au moins un canal d'écoulement (3.5) maudit.

6. Dispositif selon l'une quelconque des revendications précédentes, **dans lequel** la section de l'élément de fermeture (6.1.1) comporte plusieurs orifices de passage (6.1.2) disposés ou formés axialement par rapport à son axe longitudinal (A3).

7. Dispositif selon l'une quelconque des revendications précédentes, **dans lequel** un corps de boîtier du dispositif d'extrusion (2) ou un corps de boîtier d'un composant adaptateur (3.3) disposé à une sortie d'écoulement (5.3) d'une chambre d'extrudeuse (5.1) du dispositif d'extrusion (2) comporte une zone de réception (7.1.1) pour la section d'élément de fermeture (6.1.1) formant un emplacement de roulement.

8. Dispositif selon la revendication 7, **dans lequel** la zone de réception (7.1.1) est affectée à un dispositif d'étanchéité (8) comportant au moins un élément d'étanchéité (8.1) entourant la section de l'élément de fermeture (6.1.1) au moins par section, le cas échéant complètement, du côté de la circonférence extérieure.

9. Dispositif selon la revendication 8, **dans lequel** au moins un élément d'étanchéité (8.1) est incorporé dans un espace d'absorption délimité par un corps d'absorption en forme ou en forme de tube (8.2), dans lequel le corps d'absorption (8.2) est associé à un dispositif de pressage qui est équipé pour appliquer une force de pressage agissant parallèlement à l'axe longitudinal (A3) de la section d'élément de fermeture (6.1.1) sur au moins un élément d'étanchéité (8.1), en particulier de telle sorte qu'au moins un élément d'étanchéité (8.1) se déforme radialement par rapport à l'axe longitudinal de la section d'élément de fermeture (6.1.1) contre une paroi de l'élément d'absorption (8.1) délimitant l'espace d'absorption.

10. Dispositif selon l'une quelconque des revendications précédentes, **comprenant en outre** un dispositif de commande (9), destiné à produire des informations de commande pour commander les mouvements de la section de l'élément de fermeture (6.1.1) dans au moins une position ouverte et/ou dans au moins une position de fermeture.

11. Dispositif selon la revendication 10, **dans lequel** le dispositif de commande (9) est configuré pour produire les informations de commande sur la base d'informations de capteur fournies par au moins un dispositif de capteur (10), notamment en ce qui concerne la pression et/ou la température et/ou la vitesse d'écoulement du matériau d'extrusion fondu contenu dans le dispositif (1).

12. Procédé de fabrication additive basée sur l'extrusion d'un objet tridimensionnel comprenant la fusion d'un matériau d'extrusion et l'application du matériau d'extrusion fondu sur un support au moyen d'un dispositif (1) selon l'une quelconque des revendications 1 à 11.
